# EUROPEAN PATENT SPECIFICATION

(11) **EP 3 075 437 B1**
(45) Date of publication and mention of the grant of the patent: **17.08.2022**
(21) Application number: 14865164.9
(22) Date of filing: 10.04.2014
(51) Int. Cl.: B01D 53/94, B01J 23/26, B01J 23/34, B01J 23/68, B01D 53/86

(54) **EXHAUST GAS TREATMENT SYSTEM**
ABGASBEHANDLUNGSSYSTEM
SYSTÈME DE TRAITEMENT DE GAZ D'ÉCHAPPEMENT

(30) Priority: 26.11.2013 JP 2013243963
(43) Date of publication of application: 05.10.2016
(73) Proprietor: Mitsubishi Heavy Industries, Ltd., Tokyo 108-8215 (JP)
(72) Inventor: MASUDA, Tomotsugu, Tokyo 108-8215 (JP); HIGASHINO, Koji, Tokyo 108-8215 (JP); KATSUKI, Masatoshi, Tokyo 108-8215 (JP)
(74) Representative: Henkel & Partner mbB
(86) International application number: PCT/JP2014/060380
(87) International publication number: WO 2015/079720

(56) References cited:
- DE-T5-112011 104 673
- JP-A- H0 418 932
- JP-A- H0 824 651
- JP-A- 2000 140 640
- JP-A- 2007 229 628
- JP-A- 2008 119 651
- US-A1- 2005 137 082
- US-A1- 2007 217 968
- US-A1- 2008 112 871
- GOO ET AL: "Effects of NO"2 and SO"2 on selective catalytic reduction of nitrogen oxides by ammonia", CHEMOSPH, PERGAMON PRESS, OXFORD, GB, vol. 67, no. 4, 18 January 2007 (2007-01-18), pages 718-723, XP005834727, ISSN: 0045-6535, DOI: 10.1016/J.CHEMOSPHERE.2006.10.070
- LIANG CHEN ET AL: "Promotional Effect of Ce-doped V 2 O 5 -WO 3 /TiO 2 with Low Vanadium Loadings for Selective Catalytic Reduction of NO x by NH 3", JOURNAL OF PHYSICAL CHEMISTRY C, vol. 113, no. 50, 17 December 2009 (2009-12-17), pages 21177-21184, XP055375166, US ISSN: 1932-7447, DOI: 10.1021/jp907109e

## Description

### BACKGROUND OF THE INVENTION

### TECHNICAL FIELD

The present invention relates to an exhaust gas treatment system.

### BACKGROUND ART

Volatile organic compounds (VOC) such as NOx, carbon monoxide (CO), saturated hydrocarbons excluding methane and ethane, unsaturated hydrocarbons such as ethylene, and the like are present in exhaust gases discharged from various industrial devices, for example, automobile engines, gas engines, gas turbines for aircrafts and power generation, chemical plants, various factories, and the like.

Expensive oxidation catalysts prepared by using platinum (Pt) are used as exhaust gas treatment materials in order to remove VOC in addition to reducing NOx.

Proposed in, for example, patent document 1 (Japanese Patent No. 4939082) is an exhaust gas treatment system in which for the purpose of reducing a discharge amount of CO in an exhaust gas treatment facility, noble metals are added to a denitration catalyst in a front stage to carry out denitration and partial oxidation of VOC and in which CO is oxidized and decomposed with a noble metal base catalyst in a rear stage.

Such an exhaust gas treatment system presents a problem in that the catalyst cost is increased as described above because noble metal catalysts prepared by using platinum (Pt) are used as both denitration and oxidation catalysts.

Many conventional technologies are available for denitration catalysts as described in patent document 2 (JP-A 1995-213908), patent document 3 (JP-A 2000-130216), patent document 4 (JP-A 2009-202107), patent document 6 (Patent No. 4801461), and the like. However, none of them propose denitration catalysts that are satisfactory from the viewpoint of reducing catalyst costs. Further, according to patent document 5 (JP-A 2012-245444), platinum (Pt) is not used in an oxidation reaction of CO after denitration, but no improvement in the cost is proposed with respect to the denitration reaction itself.

Patent documents 7 and 8 disclose vanadia based denitration catalysts comprising manganese oxide or chromium oxide. Patent document 9 discloses a CO oxidation catalyst comprising silver on YMNO₃. Patent document 10 discloses an exhaust system comprising in that order a denitration catalyst and a CO oxidation catalyst.

### CITATION LIST

### Patent Documents

Patent document 1: JP-B 4939082
Patent document 2: JP-A 1995-213908
Patent document 3: JP-A 2000-130216
Patent document 4: JP-A 2009-202107
Patent document 5: JP-A 2012-245444
Patent document 6: JP-B 4801461
Patent document 7: US 2008/112871 A1
Patent document 8: US 2005/137082 A1
Patent document 9: DE 11 2011 104673 T5
Patent document 10: US 2007/217968 A1

In light of the situations described above, an object of the present invention is to provide an exhaust gas treatment system which makes it possible to remove CO and VOC in addition to reducing NOx without bringing about an increase in the catalyst cost.

### SUMMARY OF INVENTION

The present inventors have studied a binary catalyst (multicomponent catalyst) which makes it possible to remove VOC in addition to denitration performance, and they have arrived at the present invention.

That is, an exhaust gas treatment system according to claim 1 is provided order to achieve the object described above.

In the exhaust gas treatment system according to the present invention, the catalyst for removing nitrogen oxides and VOC described above may contain at least one oxide selected from chromium oxide and manganese oxide in an amount between 1.0 wt % and 1.5 wt % in terms of a total amount of chromium oxide and manganese oxide against titanium oxide, tungsten oxide and vanadium oxide in one embodiment thereof.

According to the present invention, an exhaust gas treatment system which makes it possible to remove VOC in addition to reducing NOx without bringing about an increase in the catalyst cost is provided.

### BRIEF DESCRIPTION OF DRAWINGS

Fig. 1 is a graph showing a NOx reduction rate in an example of the catalyst for removing nitrogen oxides and VOC which can be adopted in the exhaust gas treatment system according to the present invention.
Fig. 2 is a graph showing a CO reduction rate in an example of the catalyst for removing nitrogen oxides and VOC which can be adopted in the exhaust gas treatment system according to the present invention.
Fig. 3 is a graph showing a C₂H₄ reduction rate in an example of the catalyst for removing nitrogen oxides and VOC which can be adopted in the exhaust gas treatment system according to the present invention.
Fig. 4 is a graph showing a C₃H₈ reduction rate in an example of the catalyst for removing nitrogen oxides and VOC which can be adopted in the exhaust gas treatment system according to the present invention.
Fig. 5 is a graph showing a HCHO reduction rate in an example of the catalyst for removing nitrogen oxides and VOC which can be adopted in the exhaust gas treatment system according to the present invention.
Fig. 6 is a graph showing a CO reduction rate in an example of the CO-oxidizing catalyst which can be adopted in the exhaust gas treatment system according to the present invention.
Fig. 7 is a graph showing a C₂H₄ reduction rate in an example of the CO-oxidizing catalyst which can be adopted in the exhaust gas treatment system according to the present invention.
Fig. 8 is a graph showing a CO removing rate in an example of the exhaust gas treatment system according to the present invention.
Fig. 9 is a graph showing a HCHO removing rate in an example of the exhaust gas treatment system according to the present invention.
Fig. 10 is a graph showing a C₂H₄ removing rate in an example of the exhaust gas treatment system according to the present invention.
Fig. 11 is a graph showing a C₃H₈ removing rate in an example of the exhaust gas treatment system according to the present invention.

### DESCRIPTION OF THE PREFERRED EMBODIMENTS

The exhaust gas treatment system according to present invention is explained below in further detail.

### Exhaust gas treatment system according to the present invention

In the exhaust gas treatment system according to the present invention, a catalyst for removing nitrogen oxides by subjecting nitrogen oxides contained in an exhaust gas to a catalytic reduction treatment in the presence of ammonia and which contains titanium oxide, tungsten oxide and vanadium oxide, and at least one oxide selected from chromium oxide and manganese oxide is disposed for removing nitrogen oxides and VOC.

### Catalyst for removing nitrogen oxides and VOC

In the exhaust gas treatment system according to the present invention, the catalyst for removing nitrogen oxides and VOC contains titanium oxide, tungsten oxide and vanadium oxide (first component), and at least one oxide selected from chromium oxide and manganese oxide (second component). The catalyst for removing nitrogen oxides comprising the components described above makes it possible to reduce nitrogen oxides and decompose them into nitrogen and water, which are harmless, by adding ammonia (NH₃) to exhaust gases discharged from gas turbines, diesel engines, gas engines, or chemical plants such as a nitric acid plant and the like which have large load variations, and bringing them into contact with the above catalyst. In particular, blending the catalyst for removing nitrogen oxides with the second component makes it possible to reduce nitrogen oxides contained in exhaust gases in the presence of ammonia and decompose them into nitrogen and water, which are harmless, even when a proportion of nitrogen dioxide based on nitrogen oxides contained in exhaust gases is large as is the case with a low load applied in gas turbine combined cycle (GTCC) power generation.

The catalyst for removing nitrogen oxides and VOC described above can be obtained by impregnating a base material comprising the first component with the second component and calcining it after drying. Also, the catalyst for removing nitrogen oxides and VOC can be obtained as well by adding a solvent to the first component and the second component, kneading them, subjecting the kneaded matter to extrusion molding, and calcining it after drying.

In the first component described above, the tungsten oxide and the vanadium oxide are added respectively in the amounts between 3 parts by weight and 25 parts by weight, and between 0.1 part by weight and 6 parts by weight based on 100 parts by weight of the titanium oxide. Setting the weight ratio as above makes it possible to sufficiently denitrate nitrogen monoxide contained in an exhaust gas.

The total amount of the components constituting the second component against the total amount of the first and second components can be controlled to between 1.0 wt % and 1.5 wt %. Controlling the total amount to such weight ratio makes it possible to accelerate a reduction reaction of nitrogen monoxide and a reduction reaction of nitrogen dioxide in good balance to remove efficiently nitrogen oxides contained in exhaust gases and enhance a partial oxidation performance of VOC.

### CO-oxidizing catalyst

In the exhaust gas treatment system according to the present invention, a catalyst obtained by carrying silver on a double oxide is used as the CO-oxidizing catalyst having a CO-oxidizing catalytic capability.

Yttrium manganate (YMnO₃) which is a publicly known double oxide can suitably is as the double oxide.

Yttrium manganate can be produced, for example, by calcining a mixture comprising yttrium nitrate, manganese nitrate and citric acid. In this case, by-products such as YMn₂O₅, Y₂Mn₂O₇, Y₂O₃, Mn₂O₃ and the like are mixed therein in a certain case. However, such by-products contained in the carrier do not cause any problems.

Also, yttrium manganate can be produced as well by crushing and mixing Y₂O₃ and MnO₂ as raw materials and calcining the mixture.

The CO-oxidizing catalyst can be obtained by carrying silver on yttrium manganate alone obtained in the manner described above, or a mixture thereof with a publicly known carrier such as alumina and the like. It can be produced, for example, by introducing a carrier powder containing yttrium manganate into the solution of a soluble silver compound and calcining the resulting slurry. Also, the CO-oxidizing catalyst can be obtained as well by mixing an Ag powder or an Ag compound powder with a carrier powder, and calcining the resulting mixture. In addition, the CO-oxidizing catalyst can be produced by applying publicly known catalyst molding methods such as molding into a honeycomb form and the like.

The Ag particles have suitably a size of 10 to 20 nm.

### EXAMPLES

The examples of the exhaust gas treatment system according to the present invention shall be explained below.

A honeycomb catalyst (3.3 mm pitch, wall thickness: 0.5 mm) comprising 10 parts by weight of tungsten oxide (WO₃) and 4 parts by weight of vanadium oxide (V₂O₅) per 100 parts by weight of titanium oxide (TiO₂) was prepared by a known production method.

A solution was prepared by dissolving 91 g of manganese nitrate hexahydrate in 1 L of water and adjusting the entire amount thereof to 1 L, and the titanium oxide-tungsten oxide-vanadium oxide catalyst described above was dipped therein for 1 minute, whereby the catalyst was impregnated with manganese nitrate so that 1.5 wt % of manganese oxide was contained therein as an increased content after calcined. Subsequently, the titanium oxide-tungsten oxide-vanadium oxide catalyst carried thereon with manganese nitrate was dried and then calcined at 500°C for 5 hours. The catalyst thus obtained was referred to as a 1.5 % Mn₂O₃-impregnated honeycomb catalyst.

A solution was prepared by dissolving 79 g of manganese nitrate hexahydrate in 1 L of water and adjusting a whole amount thereof to 1 L, and the titanium oxide-tungsten oxide-vanadium oxide catalyst described above was dipped therein for 1 minute, whereby the catalyst was impregnated with manganese nitrate so that 1.3 wt % of manganese oxide was contained therein as an increased content after being calcined. Subsequently, the titanium oxide-tungsten oxide-vanadium oxide catalyst carried thereon with manganese nitrate was dried and then calcined at 500°C for 5 hours. The catalyst thus obtained was referred to as a 1.3 % Mn₂O₃-impregnated honeycomb catalyst.

A solution was prepared by dissolving 61 g of manganese nitrate hexahydrate in 1 L of water and adjusting a whole amount thereof to 1 L, and the titanium oxide-tungsten oxide-vanadium oxide catalyst described above was dipped therein for 1 minute, whereby the catalyst was impregnated with manganese nitrate so that 1.0 wt % of manganese oxide was contained therein as an increased content after being calcined. Subsequently, the titanium oxide-tungsten oxide-vanadium oxide catalyst carried thereon with manganese nitrate was dried and then calcined at 500°C for 5 hours. The catalyst thus obtained was referred to as a 1.0 % Mn₂O₃-impregnated honeycomb catalyst.

A solution was prepared by dissolving 132 g of chromium nitrate nonahydrate in 1 L of water and adjusting the entire amount thereof to 1 L, and the titanium oxide-tungsten oxide-vanadium oxide catalyst described above was dipped therein for 1 minute, whereby the catalyst was impregnated with manganese nitrate so that 1.5 wt % of chromium oxide was contained therein as an increased content after being calcined. Subsequently, the titanium oxide-tungsten oxide-vanadium oxide catalyst carried thereon with chromium nitrate was dried and then calcined at 500°C for 5 hours. The catalyst thus obtained was referred to as a 1.5 % Cr₂O₃-impregnated honeycomb catalyst.

A carrier powder comprising yttrium manganate (YMnO₃) was added to a silver nitrate aqueous solution so that an amount of Ag was 3 atomic % based on the number of Y atoms, and the mixture was stirred for 30 minutes. The slurry thus obtained was coated on the surface of a cordierite-made honeycomb of 150 mm x length 300 mm. This was dried at 120°C for 3 hours and then calcined in the air for 1 hour. An amount of yttrium manganate carried on the base material obtained above was 40 g/L, and a carried amount of Ag in terms of metal was 0.69 g/L. The Ag particles carried on yttrium manganate had a size of 10 nm to 20 nm. This was referred to as a CO-oxidizing catalyst of an Ag base.

### Performance test

Four kinds of the honeycomb catalysts prepared in the manners described above were used to evaluate catalyst performances on test conditions shown in the following Table 1, and the CO-oxidizing catalyst prepared in the manner described above was used to evaluate performances on test conditions shown in the following Table 2.

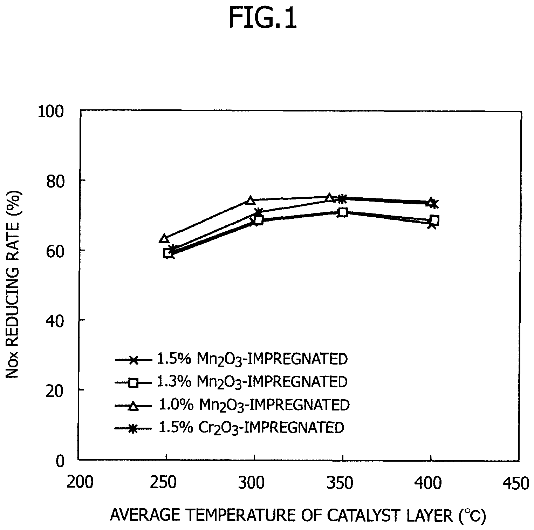

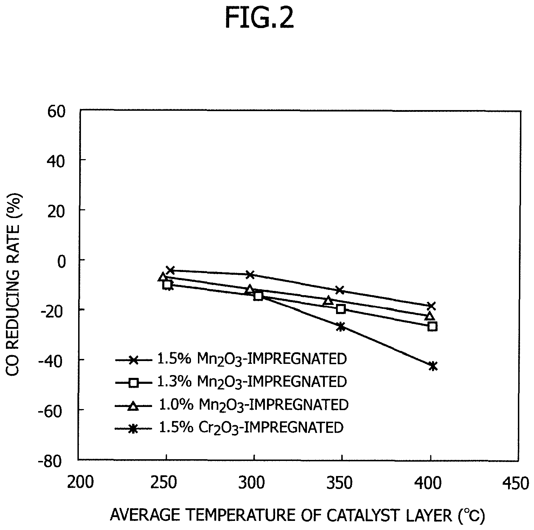

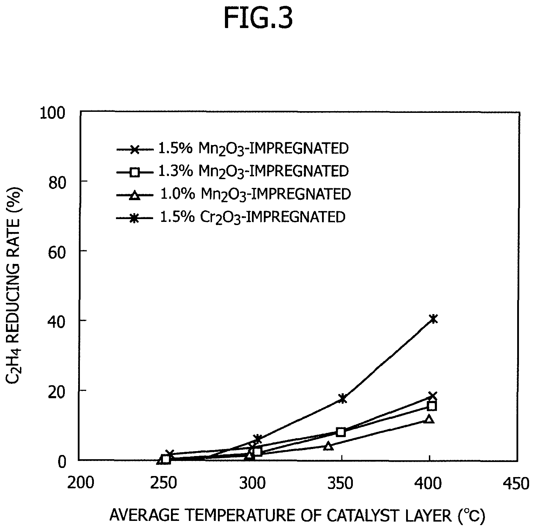

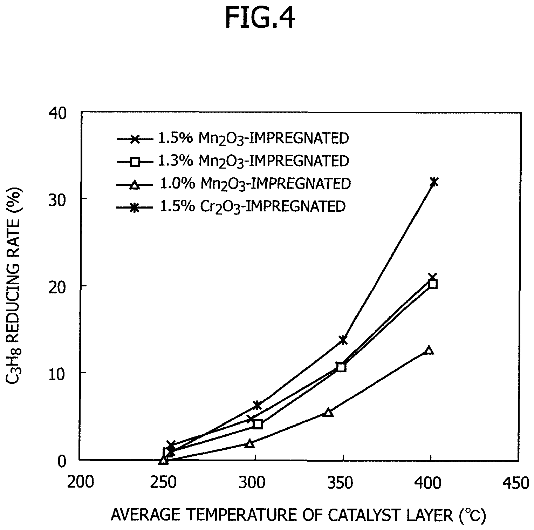

Four kinds of the honeycomb catalysts evaluated are catalysts which are known not to be reduced in a denitration performance even when a NO₂/NOx ratio is enhanced in applying a low load in GTCC (see JP-A 2008-119651). The results obtained by evaluating the performances of the above honeycomb catalysts are shown in Figs. 1 to 5. In the drawings, the term of "honeycomb catalyst" is omitted. It was confirmed that the removing performances of HCHO were equivalent in terms of dispersion within a range of analytical error. It was confirmed from the results shown in Figs. 1 to 5 that the high denitration performance was obtained on a high NO₂/NOx ratio condition by controlling an impregnated amount of Mn₂O₃ at least to 1.0 wt % or more and that the partial oxidation performances of VOC (C₂H₄, C₃H₈, HCHO) were enhanced to an equal or higher level. That is, it has become confirmed that such the honeycomb catalysts as described above are catalysts for removing nitrogen oxides and VOC which can suitably be adopted in the exhaust gas treatment system according to the present invention.

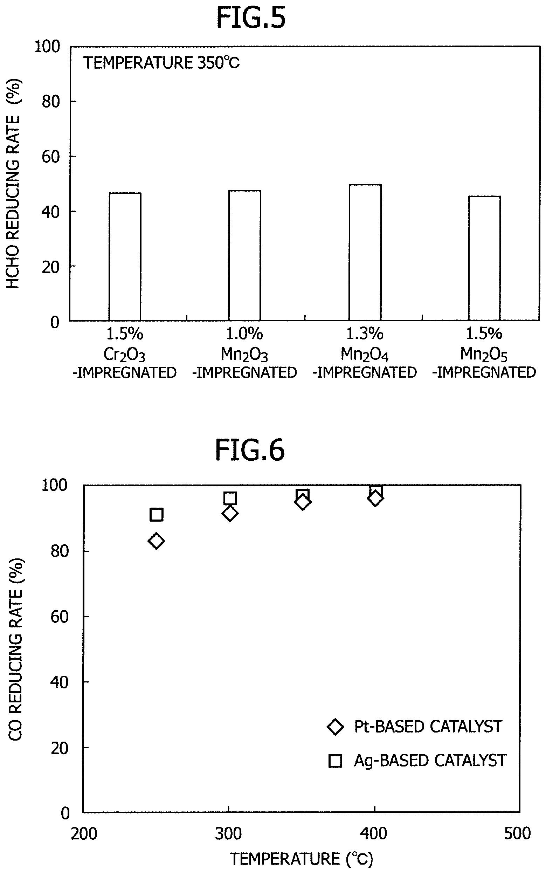

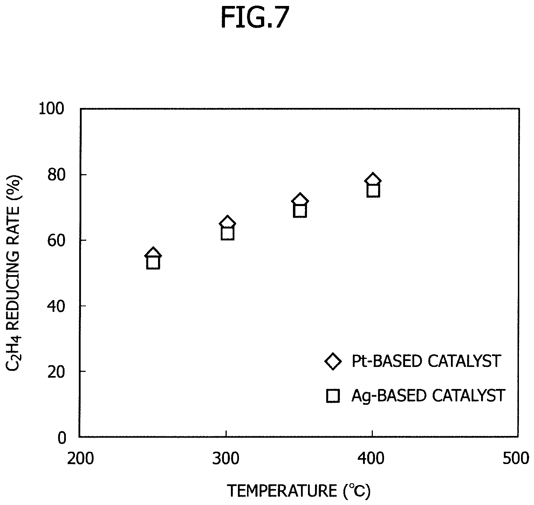

The CO-oxidizing catalyst prepared in the manner described above is an Ag base catalyst which is used as an oxidation catalyst for GTCC and which is expected to exert an oxidation performance at a low cost. The results obtained by evaluating the performances of the above CO-oxidizing catalyst are shown in Figs. 6 and 7. It was confirmed from the above results that the CO-oxidizing catalyst was excellent in reducing C₂H₄ and excellent as well in oxidizing CO.

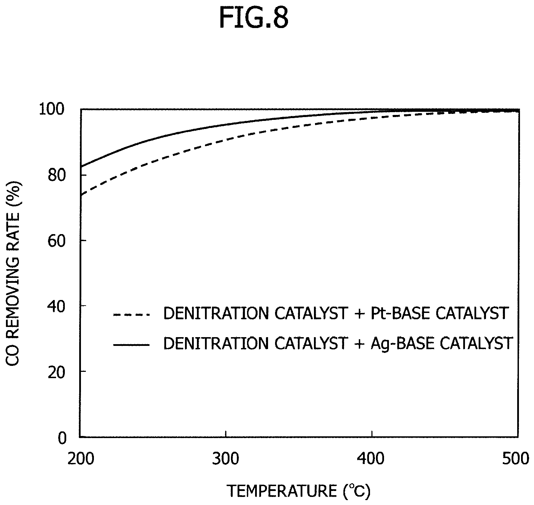

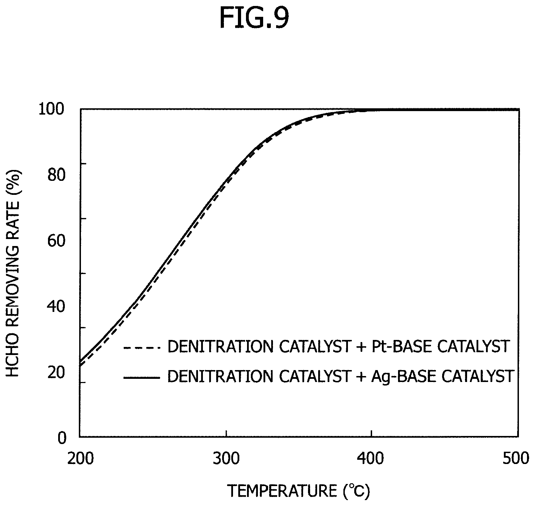

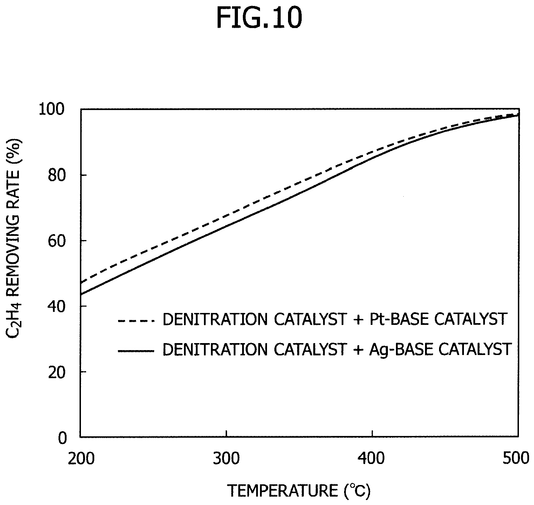

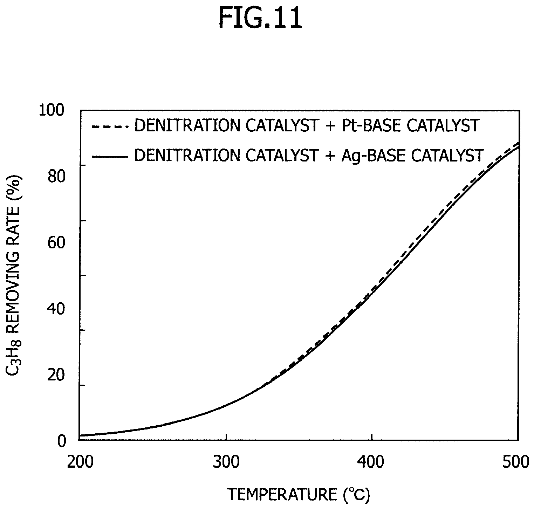

The oxidation reaction rates were calculated based on the results described above, and the performances in a case where the honeycomb catalyst (1.3 % Mn₂O₃- impregnated honeycomb catalyst) described above was provided in the front stream and where the CO-oxidizing catalyst was provided in the rear stream were calculated on a trial base (honeycomb catalyst: AV = 12 Nm/hr, SV = 12,000 hr⁻¹; CO-oxidizing catalyst: SV = 120,000 hr⁻¹). The results thereof are shown in Figs. 8 to 11.

A catalyst which is a commercial Pt base oxidation catalyst and which is prepared by carrying 1.0 wt % platinum (Pt) on a metal carrier was used as a platinum (Pt) catalyst for control.

As a result thereof, it has been found that the exhaust gas treatment system constructed is comparable to a system in which a platinum (Pt) catalyst is provided in the rear stream in terms of any of a CO removing rate, a HCHO removing rate, a C₂H₄ removing rate and a C₃H₈ removing rate and that it is excellent. That is, it has been found that the exhaust gas treatment system which is excellent in a removing performance of VOC and improved in a CO removing performance and which has only to use a catalyst comprising inexpensive raw materials without using expensive platinum (Pt) can be constructed according to the present invention.

**Table 1**

| Evaluation conditions of catalyst for removing nitrogen oxides and VOC | | |
|---|---|---|
| Composition | Unit | Concentration |
| CO | ppmvd | 63 |
| HCHO | ppmvd | 13 |
| C₂H₄ | ppmvd | 13 |
| C₃H₈ | ppmvd | 13 |
| NOx | ppmvd | 63 |
| NH₃/NOx | - | 1.0 |
| O₂ | % vd | 13 |
| CO₂ | % vd | 7 |
| N₂ | - | balance |
| Moisture | % vd | 9 |
| AV value | Nm/hr | 50 |
| SV value | 1/hr | 50,000 |
| Temperature | °C | 250, 300, 350, 400 |

**Table 2**

| Evaluation conditions of CO-oxidizing catalyst | | |
|---|---|---|
| Composition | Unit | Concentration |
| CO | ppmvd | 63 |
| HCHO | ppmvd | 13 |
| C₂H₄ | ppmvd | 13 |
| C₃H₈ | ppmvd | 13 |
| O₂ | % vd | 13 |
| CO₂ | % vd | 7 |
| N₂ | - | balance |
| Moisture | % vd | 9 |
| SV value | 1/hr | 120,000 |
| Temperature | °C | 250, 300, 350, 400 |

## Claims

1. An exhaust gas treatment system comprising a catalyst for removing nitrogen oxides and volatile organic compounds (VOC) from exhaust gas, the catalyst containing titanium oxide, tungsten oxide, vanadium oxide, and at least one oxide selected from chromium oxide and manganese oxide,
**characterized in that** a CO-oxidizing catalyst having a CO-oxidizing catalytic capability is disposed in a rear stream from the catalyst for removing nitrogen oxides and VOC, wherein the CO-oxidizing catalyst is a CO-oxidizing catalyst prepared by carrying silver either on YMnO₃, or on a mixture of YMnO₃ and another carrier.

2. The exhaust gas treatment system according to claim 1, **characterized in that** the catalyst for removing nitrogen oxides and VOC contains at least one oxide selected from chromium oxide and manganese oxide in an amount between 1.0 wt % and 1.5 wt % in terms of a total amount of chromium and manganese oxides as against titanium oxide, tungsten oxide and vanadium oxide.

3. The exhaust gas treatment system according to claim 1, **characterized in that** silver is in the form of particles which have a size of 10 to 20 nm.

## Patentansprüche

1. Abgasbehandlungssystem, welches einen Katalysator zur Entfernung von Stickoxiden und flüchtigen organischen Verbindungen (VOC) aus Abgas umfasst, wobei der Katalysator Titanoxid, Wolframoxid, Vanadiumoxid und zumindest ein Oxid ausgewählt aus Chromoxid und Manganoxid enthält,
**dadurch gekennzeichnet, dass** ein CO-Oxidationskatalysator mit der Fähigkeit zur katalytischen Oxidation von CO stromabwärts des Katalysators zur Entfernung von Stickoxiden und VOC angeordnet ist, wobei es sich bei dem CO-Oxidationskatalysator um einen CO-Oxidationskatalysator handelt, welcher durch Trägern von Silber entweder auf YMnO₃ oder auf einem Gemisch aus YMnO₃ und einem weiteren Träger hergestellt worden ist.

2. Abgasbehandlungssystem gemäß Anspruch 1, **dadurch gekennzeichnet, dass** der Katalysator zur Entfernung von Stickoxiden und VOC zumindest ein Oxid ausgewählt aus Chromoxid und Manganoxid in einer Menge von zwischen 1.0 Gew.-% und 1.5 Gew.-%, bezogen auf die Gesamtmenge an Chromund Manganoxiden gegenüber Titanoxid, Wolframoxid und Vanadiumoxid, enthält.

3. Abgasbehandlungssystem gemäß Anspruch 1, **dadurch gekennzeichnet, dass** Silber in Form von Partikeln mit einer Größe von 10 bis 20 nm vorliegt.

## Revendications

1. Système de traitement de gaz d'échappement comprenant un catalyseur pour éliminer des oxydes d'azote et des composés organiques volatils (VOC) d'un gaz d'échappement, le catalyseur contenant de l'oxyde de titane, de l'oxyde de tungstène, de l'oxyde de vanadium et au moins un oxyde sélectionné parmi de l'oxyde de chrome et de l'oxyde de manganèse,
**caractérisé en ce qu'**un catalyseur d'oxydation de CO présentant une capacité catalytique d'oxydation de CO est disposé dans un flux arrière depuis le catalyseur pour éliminer les oxydes d'azote et les VOC, dans lequel le catalyseur d'oxydation de CO est un catalyseur d'oxydation de CO préparé par transport d'argent soit sur du YMnO₃, soit sur un mélange de YMnO₃ et un autre porteur.

2. Système de traitement de gaz d'échappement selon la revendication 1, **caractérisé en ce que** le catalyseur pour éliminer les oxydes d'azote et les VOC contient au moins un oxyde sélectionné parmi de l'oxyde de chrome et de l'oxyde de manganèse en une quantité entre 1,0 % en poids et 1,5 % en poids en termes d'une quantité totale d'oxydes de chrome et de manganèse par rapport à l'oxyde de titane, l'oxyde de tungstène et l'oxyde de vanadium.

3. Système de traitement de gaz d'échappement selon la revendication 1, **caractérisé en ce que** l'argent se présente sous la forme de particules qui ont une taille de 10 à 20 nm.
